# FASCICULE DE BREVET EUROPEEN

(11) **EP 3 807 103 B1**
(45) Date de publication et mention de la délivrance du brevet: **13.07.2022**
(21) Numéro de dépôt: 19707379.4
(22) Date de dépôt: 26.02.2019
(51) Int. Cl.: B60B 21/02, B60B 3/00, B60B 3/02, B60B 3/10

(54) **JANTE POUR ROUE DE VÉHICULE**
FAHRZEUGRADFELGE
VEHICLE WHEEL RIM

(30) Priorité: 12.06.2018 FR 1855101
(43) Date de publication de la demande: 21.04.2021
(73) Titulaire: Renault s.a.s, 92100 Boulogne Billancourt (FR)
(72) Inventeur: DIBOUT, Simon, 91300 MASSY (FR); BARRIÈRE, Mélanie, 28410 Saint Lubin de la Haye (FR); REULLIER, Anthony, 72250 Brette Les Pins (FR)
(74) Mandataire: Renault Group
(86) Numéro de dépôt international: PCT/EP2019/054653
(87) Numéro de publication internationale: WO 2019/238278

(56) Documents cités:
- EP-A1- 2 540 521
- EP-B1- 0 698 507
- WO-A1-2015/106977
- DE-A1-102016 005 646
- FR-A1- 3 030 370

## Description

L'invention concerne le domaine des roues de véhicule, en particulier pour les véhicules automobiles.

L'invention concerne une jante pour roue de véhicule.

Les jantes en aluminium sont fabriquées généralement par des procédés par forgeage ou fluotournage. Ce sont des pièces pleines ne comprenant pas de cavité.

Les jantes en aluminium sont très rependues car elles offrent un bon rapport entre la qualité, la fiabilité et l'esthétisme. Elles sont plus légères que les jantes en acier.

Afin d'alléger les jantes en aluminium, il est connu d'utiliser un procédé de fonderie permettant de réaliser une cavité dans la région du crochet avant de la bande de roulage de la jante. Cela permet de réduire un peu le poids de la jante. Il serait cependant souhaitable d'encore réduire le poids de la jante.

Il existe également des jantes en matériaux composites, par exemple contenant du kevlar ou du carbone. Le prix de telles jantes est élevé. Elles sont certes plus légères, mais elles sont fragiles, en particulier lors des chocs longitudinaux par exemple lors de la montée sur un trottoir ou lors des chocs latéraux, en particulier lors de frottements le long d'un trottoir.

Le document DE102016005646 divulgue l'utilisation de l'impression métallique tridimensionnelle pour fabriquer une jante. Ce document divulgue des cavités localisées dans la jante, en particulier plusieurs cavités dans les rayons de la face avant, ainsi qu'une cavité dans la région du crochet avant de la bande de roulage. Ainsi, par rapport à une jante réalisée avec un procédé de fonderie, le poids est allégé au niveau de la face avant, mais pas dans la bande de roulage.

L'invention cherche à encore abaisser le poids d'une jante imprimée avec un alliage de métal tridimensionnel, tout en garantissant une structure mécanique satisfaisante, notamment en ce qui concerne la tenue à un choc axial.

L'invention porte sur une jante pour roue de véhicule, imprimée avec un alliage de métal tridimensionnel, comportant une bande de roulage sensiblement circulaire délimitée par un rebord avant et un rebord arrière, la bande de roulage comprenant :
- un fond de jante central,
- une partie d'aménagements avant pour un appui avant de pneu, localisée entre le fond de jante et le rebord avant,
- une partie d'aménagements arrière pour un appui arrière de pneu, localisée entre le fond de jante et le rebord arrière,
la jante étant destinée à être assemblée sur un véhicule de sorte que le rebord avant soit localisé d'un côté extérieur du véhicule et que le rebord arrière soit localisé d'un côté intérieur du véhicule, la bande de roulage comprenant dans son épaisseur et selon une section radiale une pluralité de cavités.

Selon l'invention, la partie d'aménagements avant comporte une surface extérieure avant destinée à entrer en contact avec un pneu et une surface intérieure avant opposée à ladite surface extérieure avant, la partie d'aménagements avant comprenant un crochet avant et un siège de talon avant pour un pneu, la bande de roulage comprenant une cavité de crochet avant localisée au moins en partie dans le crochet avant et une cavité de siège de talon avant localisée au moins en partie entre le siège de talon avant et la partie de la surface intérieure avant faisant face audit siège de talon avant, la cavité de crochet avant et la cavité de siège de talon avant étant séparées par une paroi de renfort.

Selon un aspect de l'invention, la paroi de renfort a une épaisseur supérieure à deux millimètres, selon une coupe radiale de la bande de roulage.

Selon un aspect de l'invention, la surface extérieure avant de la partie d'aménagements avant comprend un bossage avant de sécurité localisé entre le fond de jante et le siège de talon avant, la bande de roulage comprenant une cavité de bossage avant localisée entre le bossage avant et la surface intérieure avant de la partie d'aménagements avant faisant face audit bossage avant, la cavité de bossage avant et la cavité de siège de talon avant étant séparées par une paroi de consolidation, de sorte que la paroi de renfort et la paroi de consolidation forment une cloison de séparation sensiblement en forme de V autour de la cavité de siège de talon avant, selon une coupe radiale de la bande de roulage.

Selon un aspect de l'invention, la cloison de séparation a une épaisseur supérieure à deux millimètres, selon une coupe radiale de la bande de roulage.

Selon un aspect de l'invention, la cavité de bossage avant est scindée en une première sous-cavité de bossage avant et une deuxième sous-cavité de bossage avant de sorte que la première sous-cavité de bossage avant et la cavité de siège de talon avant sont séparées de la deuxième sous-cavité de bossage avant par une paroi de séparation, de sorte que la paroi de séparation, la paroi de renfort et la paroi de consolidation forment une cloison circonférentielle sensiblement triangulaire autour de la cavité de siège de talon avant, selon une coupe radiale de la bande de roulage 3.

Selon un aspect de l'invention, la cloison de circonférentielle a une épaisseur supérieure à deux millimètres, selon une coupe radiale de la bande de roulage.

Selon un aspect de l'invention, le volume de la pluralité de cavités avant occupe entre 40% et 80% du volume la partie d'aménagements avant.

Selon un aspect de l'invention, les cavités avant sont distantes d'au moins deux millimètres des surfaces intérieure avant et extérieure avant de la partie d'aménagements avant.

Selon un aspect de l'invention, la partie d'aménagements arrière comprend un crochet arrière et un siège de talon arrière pour un pneu, la bande de roulage comprenant dans son épaisseur au moins une cavité arrière dans la partie d'aménagements arrière.

Selon un aspect de l'invention, la jante comprend une cavité de crochet arrière localisée au moins en partie dans le crochet arrière.

Selon un aspect de l'invention, la partie d'aménagements arrière comporte une surface extérieure arrière destinée à entrer en contact avec un pneu et une surface intérieure arrière opposée à ladite surface extérieure avant, la surface extérieure arrière de la partie d'aménagements arrière comprenant un bossage arrière de sécurité localisé entre le fond de jante et le siège de talon arrière, la bande de roulage comprenant une cavité de bossage arrière localisée entre le bossage arrière et la surface intérieure arrière de la partie d'aménagements arrière faisant face audit bossage arrière.

Selon un aspect de l'invention, la ou les cavités arrière sont distantes d'au moins un millimètre des surfaces intérieure arrière et extérieure arrière de la partie d'aménagements avant.

Selon un aspect de l'invention, au moins deux cavités sont de forme sensiblement annulaire et coaxiales avec un axe de rotation de la bande de roulage.

Selon un aspect de l'invention, la cavité de bossage avant est de forme sensiblement annulaire et coaxiale avec l'axe de rotation de la bande de roulage.

Selon un aspect de l'invention, la cavité de bossage arrière est de forme sensiblement annulaire et coaxiale avec l'axe de rotation de la bande de roulage.

Selon un aspect de l'invention, la cavité de crochet avant est de forme sensiblement annulaire et coaxiale avec l'axe de rotation de la bande de roulage.

Selon un aspect de l'invention, la cavité de crochet arrière est de forme sensiblement annulaire et coaxiale avec l'axe de rotation de la bande de roulage.

Selon un aspect de l'invention, la première sous-cavité de bossage avant est de forme sensiblement annulaire et coaxiale avec l'axe de rotation de la bande de roulage.

Selon un aspect de l'invention, la deuxième sous-cavité de bossage avant de forme sensiblement annulaire et coaxiale avec l'axe de rotation de la bande de roulage.

Selon un aspect de l'invention, la cavité de siège de talon avant est de forme sensiblement annulaire et coaxiale avec l'axe de rotation de la bande de roulage.

Selon un aspect de l'invention, la paroi de consolidation est de forme sensiblement annulaire et coaxiale avec l'axe de rotation de la bande de roulage.

D'autres avantages et caractéristiques de l'invention apparaîtront à la lecture de la description et des dessins qui sont :

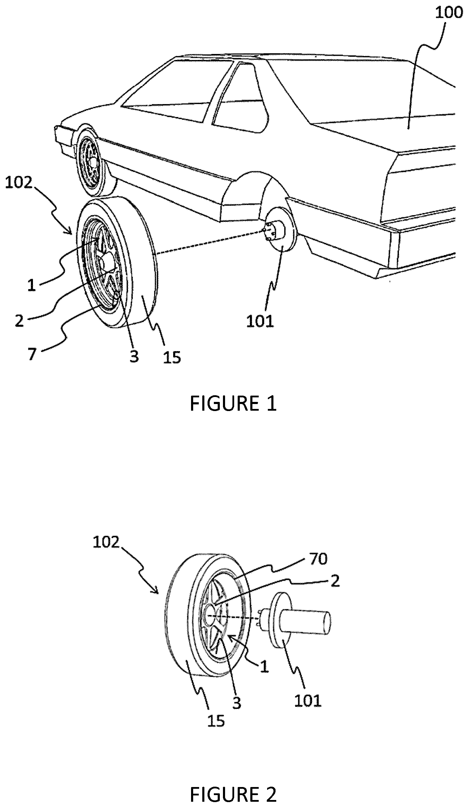

- la figure 1, qui représente une vue en perspective du côté extérieur d'un véhicule, une des roues du véhicule étant désassemblée de son essieu,
- la figure 1, qui représente une vue en perspective d'une roue désassemblée de son essieu, vue du côté intérieur du véhicule,
- la figure 3, qui représente une section radiale d'une jante,
- la figure 4, qui représente une section radiale de la partie d'aménagements avant de la jante selon un premier mode de réalisation,
- la figure 5, qui représente une section radiale de la partie d'aménagements avant de la jante selon un deuxième mode de réalisation,
- la figure 6, qui représente une section radiale de la partie d'aménagements avant de la jante selon un troisième mode de réalisation,
- la figure 7, qui représente une section radiale de la partie d'aménagements arrière de la jante selon l'un quelconque des modes de réalisation.

La figure 1 illustre un véhicule 100 dont la roue 102 arrière gauche est désassemblée du véhicule 100. Cela permet de voir l'essieu 101 sur laquelle la roue 102 est destinée à être montée.

La roue 102 comprend une jante 1 et un pneu 15.

La jante 1 comprend une face avant 2 et une bande de roulage 3 sensiblement circulaire, délimitée du côté extérieur du véhicule par un rebord avant 7.

La bande de roulage 3 est la bande périphérique circulaire de la jante 1 destinée à recevoir le pneu 102 du véhicule 100.

Le rebord avant 7 est sensiblement circulaire.

La face avant 2 de la jante 1 est perpendiculaire à la bande de roulage 3 qui, lorsque la jante 1 est montée sur un véhicule, est visible depuis l'extérieur du véhicule selon une vue de côté du véhicule. La face avant 2 comprend des rayons.

Comme illustré sur la figure 2, la bande de roulage 3 de la jante 1 est délimitée du côté intérieur du véhicule par un rebord arrière 70. Le rebord arrière 70 de la jante 1 est le rebord de la jante 1 destiné à faire face à l'essieu 101 du véhicule.

Le rebord arrière 70 est sensiblement circulaire.

La jante 1 de l'invention est imprimée avec un alliage de métal tridimensionnel selon un procédé par exemple connu de l'art antérieur.

Selon un mode de réalisation préférée, la jante 1 est imprimée avec un alliage d'aluminium tridimensionnel.

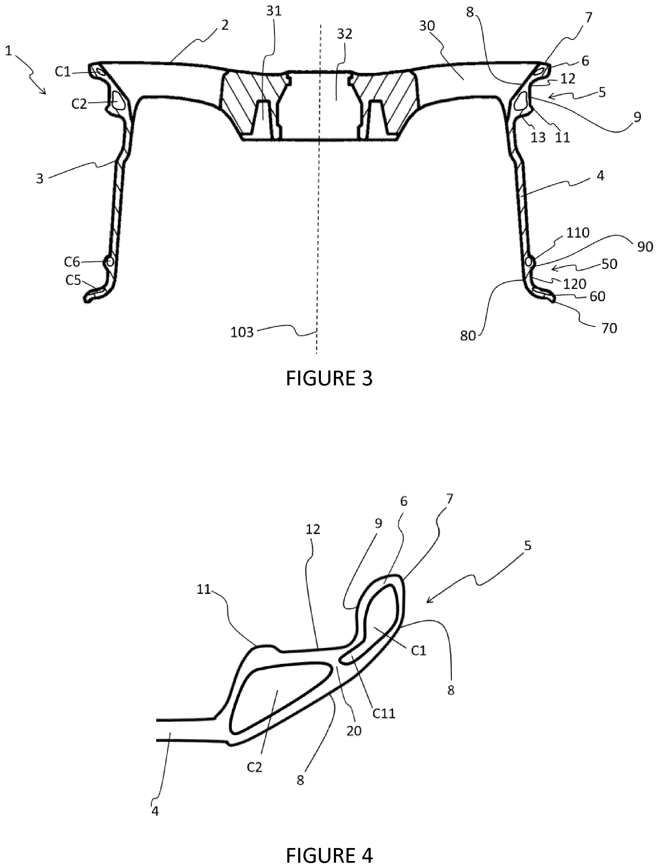

Comme illustré sur la figure 3, la face avant 2 comprend des rayons 30, des trous de boulons 31 et un trou de moyeu 32. L'axe de rotation 103 de la bande de roulage 3 passe par le centre du trou de moyeu 32.

La bande de roulage 3 étant sensiblement circulaire, une section de la bande de roulage 3 selon un plan perpendiculaire à l'axe de rotation 103 est une couronne sensiblement circulaire.

La figure 3 est une section radiale de la jante 1, c'est-à-dire une vue selon un plan perpendiculaire au plan général de la face avant 2.

La bande de roulage 3 est une bande périphérique circulaire. Les parties de la jante 1 qui ne sont pas circulaires ne font pas partie de la bande de roulage, mais appartiennent à la face avant 2.

La bande de roulage 3 comprend en sa partie centrale un fond de jante 4.

La bande de roulage 3 comprend en ses extrémités, de part et d'autre du fond de jante 4, des parties d'aménagements 5, 50 pour des appuis de pneu.

La partie d'aménagements avant 5 pour un appui avant de pneu 15 est localisée entre le fond de jante 4 et le rebord avant 7.

La partie d'aménagements avant 5 est localisée du côté de la face avant 2.

La partie d'aménagements arrière 50 pour un appui arrière de pneu 15 est localisée entre le fond de jante 4 et le rebord arrière 70.

La surface de la partie d'aménagement avant 5 destinée à entrer en contact avec le pneu 15 est la surface extérieure avant 9. La surface de la partie d'aménagement avant 5, opposée à surface extérieure avant 9 et lui faisant face est la surface intérieure avant 8.

La surface intérieure 8 délimite la face avant 2 de la partie d'aménagement avant 5 de la bande de roulage 3. La surface intérieure 8 est circulaire. Ainsi, une section de la bande de roulage 3 selon tout plan perpendiculaire à l'axe de rotation 103 de la jante 1 est couronne sensiblement circulaire. La partie d'extrémité des rayons 30 reliée à la bande de roulage 3 ne fait pas partie de la partie d'aménagements avant 5, même si les rayons 30 sont fait de matière avec la bande de roulage 3.

La partie d'aménagements avant 5 comporte un crochet avant 6, un siège de talon avant 12 pour un pneu 102 et un bossage avant 11 de sécurité. Le bossage avant 11 de sécurité est localisé sur la surface extérieure avant 9. Le siège de talon avant 12 est destiné à recevoir le bourrelet avant d'un pneu 102, ledit bourrelet avant étant maintenu de part et d'autre par le crochet avant 6 et le bossage avant 11 de sécurité.

La surface extérieure avant 9 comprend une partie de dénivelé 13 qui relie le bossage avant 11 de sécurité au fond de jante 4. En d'autres termes, dans la partie d'aménagements avant 5, le plan général du siège de talon avant 12 n'est pas dans le même plan que le fond de jante 4, la distance les séparant étant supérieure à une valeur de l'ordre d'un centimètre, par exemple, autour de deux centimètres.

Du côté opposé à la face avant 2, c'est-à-dire du côté du rebord arrière 70, la bande de roulage 3 comprend une partie d'aménagements arrière 50 comportant un crochet arrière 60, un siège de talon arrière 120 pour un pneu 15 et un bossage arrière 110 de sécurité.

La surface de la partie d'aménagement arrière 50 destinée à entrer en contact avec le pneu 15 est la surface extérieure arrière 90. La surface de la partie d'aménagement arrière 50, opposée à surface extérieure arrière 90 et lui faisant face est la surface intérieure arrière 80.

Le bossage arrière 110 de sécurité est localisé sur la surface extérieure arrière 90.

Le siège de talon arrière 120 est destiné à recevoir le bourrelet arrière d'un pneu 15, ledit bourrelet arrière étant maintenu de part et d'autre par le crochet arrière 60 et le bossage arrière 110 de sécurité.

Le fond de jante 4 est située entre le bossage avant 11 de sécurité et le bossage arrière 110 de sécurité.

Le fond de jante 4 ne comprend pas la partie de dénivelé 13 qui relie le bossage avant 11 de sécurité au fond de jante 4. La partie de dénivelé 13 appartient à la partie d'aménagements avant 5.

Afin d'alléger le poids de la jante 1, des cavités avant C1, C2 sont présentes dans de la partie d'aménagement avant 5 et des cavités arrière C5, C6 sont présentes dans la partie d'aménagement arrière 50.

Les cavités, en particulier les cavités avant C1, C2 ne peuvent pas être agencées de manière arbitraire au sein de la bande de roulement 3.

L'agencement des cavités avant C1, C2 doit permettre de satisfaire les normes imposées par le secteur de l'automobile tout en allégeant de plus possible le poids de la bande de roulement 3.

En particulier, la norme ISO 7141:2005 prescrit une méthode d'essai en laboratoire destinée à évaluer la résistance au choc axial, c'est-à-dire latéral contre le trottoir, de roues fabriquées entièrement ou partiellement en alliage léger. Elle est applicable aux roues pour voitures particulières et pour d'autres véhicules dont la roue peut être en contact avec le trottoir, dans un but de classification et de maîtrise de la qualité. Un mauvais agencement des cavités avant C1, C3 peut provoquer des fissures ou une casse de la jante. Les modes de réalisation décrits ci-après permettent un allégement significatif du poids de la bande de roulement 2 tout en garantissant une bonne résistance à un choc axial tel que spécifié dans la norme spécifiée ci-dessus.

La figure 4 illustre un premier mode de réalisation selon l'invention.

La partie d'aménagement avant 5 comprend une cavité de crochet avant C1 localisée au moins en partie dans le crochet avant 6, une cavité de siège de talon avant C2 localisée au moins en partie entre le siège de talon avant 12 et la partie de la surface intérieure avant 8 lui faisant face, la cavité de crochet avant C1 et la cavité de siège de talon avant C2 étant séparées par une paroi de renfort 20.

Selon une coupe radiale de la bande de roulage 3, la paroi de renfort 20 a une épaisseur supérieure à deux millimètres.

De préférence, selon une coupe radiale de la bande de roulage 3, la paroi de renfort 20 a une épaisseur supérieure ou égale à trois millimètres et demi, typiquement de l'ordre de quatre millimètres.

Avantageusement, la paroi de renfort 20 est localisée sous le siège de talon avant 12, c'est-à-dire entre le siège de talon avant 12 et la partie de la surface intérieure avant 8 lui faisant face.

Avantageusement encore, la cavité de crochet avant C1 comprend un lobe C11 localisé sous le siège de talon avant 12. Cela permet d'optimiser le gain de poids.

La cavité de siège de talon avant C2 s'étend sous le siège de talon avant 12 mais également sous le bossage avant 11, c'est-à-dire entre le bossage avant 11 et la surface intérieure avant 8 de la partie d'aménagements avant 5 lui faisant face.

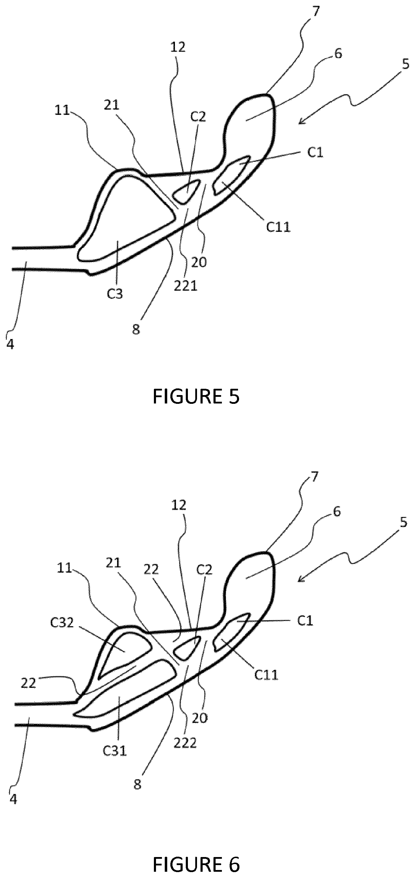

La figure 5 illustre un deuxième mode de réalisation selon l'invention.

Le deuxième mode de réalisation diffère du premier mode de réalisation en ce que la cavité de siège de talon avant C2 est plus petite et que la partie d'aménagements avant 5 comprend une troisième cavité.

La cavité de siège de talon avant C2, plus petite, est entièrement localisée sous le siège de talon avant 12. Elle ne s'étend pas sous le bossage avant 11.

La partie d'aménagements avant 5 comprend une troisième cavité : la cavité de bossage avant C3.

La cavité de bossage avant C3 est localisée sous le bossage avant 11, c'est-à-dire entre le bossage avant 11 et la surface intérieure avant 8 de la partie d'aménagements avant 5 faisant face audit bossage avant 11.

Avantageusement, la cavité de bossage avant C3 s'étend sous le siège de talon avant 12, lui conférant une forme sensiblement triangulaire, selon une coupe radiale de la bande de roulage 3.

La cavité de bossage avant C3 et la cavité de siège de talon avant C2 sont séparées par une paroi de consolidation 21.

Afin de garantir une bonne tenue au choc axial, la cavité de bossage avant C3 et la cavité de siège de talon avant C2 sont agencées de sorte que la paroi de renfort 20 et la paroi de consolidation 21 forment une cloison de séparation 221 sensiblement en forme de V autour de la cavité de siège de talon avant C2, selon une coupe radiale de la bande de roulage 3.

On entend par « forme de V » une forme comprenant au moins deux parties sensiblement droites, se faisant face et non parallèles entre elles, sécantes ou jointes l'une avec l'autre par l'intermédiaire d'une partie plane ou arrondie. La forme de V englobe par exemple la forme de U évasé.

La cloison de séparation 221 agit comme une nervure de renfort au sein de partie d'aménagement avant 5.

L'angle du V que forment la paroi de renfort 20 et la paroi de consolidation 21 autour de la cavité de siège de talon avant C2 est par exemple comprise entre 45° et 80°.

De manière avantageuse, la cavité de siège de talon avant C2 a la même forme de V, le long de la cloison de séparation 221.

La figure 6 illustre un troisième mode de réalisation selon l'invention.

Le troisième mode de réalisation diffère du deuxième mode de réalisation en ce que la cavité de bossage avant C3 est scindée en deux sous cavités.

La cavité de bossage avant C3 est scindée en une première sous-cavité de bossage avant C31 et une deuxième sous-cavité de bossage avant C32 de sorte que la première sous-cavité de bossage avant C31 et la cavité de siège de talon avant C2 sont séparées de la deuxième sous-cavité de bossage avant C32 par une paroi de séparation 22, de sorte que la paroi de séparation 22, la paroi de renfort 20 et la paroi de consolidation 21 forment une cloison circonférentielle 222 sensiblement triangulaire autour de la cavité de siège de talon avant C2, selon une coupe radiale de la bande de roulage 3.

L'avantage de ce troisième mode de réalisation est d'encore d'avantage renforcer la tenue au choc axial.

Avantageusement, selon une coupe radiale de la bande de roulage 3, la paroi de séparation 22 est sensiblement parallèle à la surface intérieure avant 8.

La cloison circonférentielle 222 sensiblement triangulaire agit comme une nervure de renfort tri-directionnelle sous le siège de talon avant C2, qui est un endroit de la partie d'aménagements avant 5 très sollicité pendant un choc axial. La cloison circonférentielle 222 permet ainsi de renforcer la partie d'aménagements avant 5 tout en l'allégeant.

La portion de la paroi de séparation 22 localisée entre la première sous-cavité de bossage avant C31 et la deuxième sous-cavité de bossage avant C32 a une épaisseur supérieure à deux millimètres, selon une coupe radiale de la bande de roulage 3.

De préférence, la portion de la paroi de séparation 22 localisée entre la première sous-cavité de bossage avant C31 et la deuxième sous-cavité de bossage avant C32 a une épaisseur supérieure ou égale à trois millimètres et demi, typiquement de l'ordre de quatre millimètres, selon une coupe radiale de la bande de roulage 3.

Selon une coupe radiale de la bande de roulage 3, la cloison circonférentielle 222 a une épaisseur supérieure à deux millimètres.

De préférence, la cloison circonférentielle 222 a une épaisseur supérieure ou égale à trois millimètres et demi, typiquement de l'ordre de quatre millimètres, selon une coupe radiale de la bande de roulage 3.

L'angle entre la paroi de séparation 22 et la paroi de consolidation 21 autour de la cavité de siège de talon avant C2 est par exemple compris 60° et 90°.

De manière avantageuse, la cavité de siège de talon avant C2 a une forme triangulaire, selon une coupe radiale de la bande de roulage 3.

Avantageusement, la sous-cavité de bossage avant C31 s'étend sous le siège de talon avant 12, lui conférant, selon une coupe radiale de la bande de roulage 3, une forme longitudinale par rapport à la surface intérieure avant 8. Ainsi, selon une coupe radiale de la bande de roulage 3, les bords longs de la sous-cavité de bossage avant C31 sont sensiblement parallèle à la surface intérieure avant 8.

La sous-cavité de bossage avant C32 épouse de préférence les contours du bossage, lui conférant une forme sensiblement triangulaire, selon une coupe radiale de la bande de roulage 3.

Dans tous les modes de réalisation, la cavité de crochet avant C1 peut prendre plus ou moins de volume au sein du crochet avant 6. Par exemple, sur la figure 2, la cavité de crochet avant C1 s'étend sensiblement dans tout le crochet avant 6. Sur les figures 3 et 4, la cavité de crochet avant C1 s'étend sensiblement dans un quart du crochet avant 6. Ces exemples ne sont pas limitatifs. La cavité de crochet avant C1 de la figure 4 peut être implémentée dans les deuxième et troisième modes de réalisation. De même, la cavité de crochet avant C1 des figures 5 et 6 peut être implémentée dans le premier mode de réalisation.

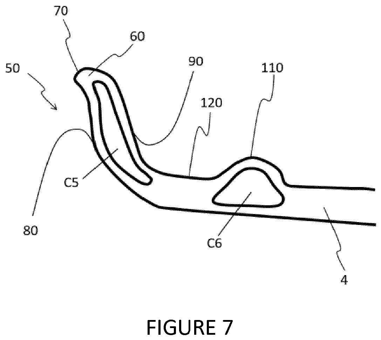

Pour alléger encore la bande de roulage 8 de la jante 1, et comme illustré sur la figure 7, la partie d'aménagements arrière 50 comprend avantageusement dans son épaisseur au moins une cavité arrière C5, C6. Cela est applicable dans tous les modes de réalisation décrits ci-dessus.

Ainsi, le crochet arrière 60 comprend en son sein une cavité de crochet arrière C5.

Une cavité de bossage arrière C6 est localisée entre le bossage arrière 110 et la surface intérieure arrière 80 de la partie d'aménagements arrière 50 faisant face audit bossage arrière 110.

Avantageusement, les cavités avant C1, C2, C3, C31, C32 sont distantes d'au moins deux millimètres des surfaces intérieure avant 8 et extérieure avant 9 de la partie d'aménagements avant 5.

Avantageusement, les cavités arrière C5, C6 sont distantes d'au moins un millimètre des surfaces intérieure arrière 80 et extérieure arrière 90 de la partie d'aménagements arrière 50.

Avantageusement, les cavités arrière C5, C6 sont plus proches des surfaces intérieure arrière 80 et extérieure arrière 90 de la partie d'aménagements arrière 50 que ne le sont les cavités avant C1, C2, C3, C31, C32 des surfaces intérieure avant 8 et extérieure avant 9 de la partie d'aménagements avant 5.

La bande de roulage 3 est fabriquée dans un alliage de métal, par exemple de l'acier maraging, ou un alliage comprenant un ou plusieurs métaux tels que du titane, de l'aluminium, du magnésium.

De préférence, la bande de roulage 3 est fabriquée dans un alliage d'aluminium.

De préférence, la bande de roulage 3 et la face avant 2 sont fabriqués d'un seul tenant, avec le même procédé, dans le même matériau.

Alternativement, la face avant 2 de la jante 1 peut être fabriquée dans un matériau différent de la bande de roulement 3 et assemblée à cette dernière par tout procédé connu tel que par exemple le soudage, le brasage, le clipsage, le collage, le vissage, le montage en force.

Les cavités avant C1, C2, C3, C31, C32 et les cavités arrière C5, C6 sont de préférences fermées, c'est-à-dire qu'elles définissent des espaces fermés.

Cependant, il est possible que les cavités avant C1, C2, C3, C31, C32 et/ou les cavités arrière C5, C6 aient au moins une ouverture ou une pluralité d'ouverture, si cela ne fragilise pas la structure.

Les cavités avant C1, C2, C3, C31, C32 et les cavités arrière C5, C6 sont internes, c'est-à-dire qu'elles sont localisées dans l'épaisseur de la bande de roulement et ne sont pas visibles respectivement sur les surfaces intérieure avant 8 et extérieure avant 9 de la partie d'aménagements avant 5 et sur les surfaces intérieure arrière 80 et extérieure arrière 90 de la partie d'aménagements arrière 50.

De préférence, les cavités avant C1, C2, C3, C31, C32 et les cavités arrière C5, C6 sont de forme sensiblement annulaire et coaxiales avec l'axe de rotation 103 de la bande de roulage 3.

Une forme annulaire est une forme circulaire fermée de section quelconque. Par exemple une cavité de section sensiblement triangulaire ou allongée et présente sur toutes les sections radiales de la bande de roulement 3 est annulaire.

## Revendications

1. Jante (1) pour roue (102) de véhicule (100), imprimée avec un alliage de métal au moyen d'une impression tridimensionnelle, comportant une bande de roulage (3) sensiblement circulaire délimitée par un rebord avant (7) et un rebord arrière (70), la bande de roulage (3) comprenant :
- un fond de jante (4) central,
- une partie d'aménagements avant (5) pour un appui avant de pneu (15), localisée entre le fond de jante (4) et le rebord avant (7),
- une partie d'aménagements arrière (50) pour un appui arrière de pneu (15), localisée entre le fond de jante (4) et le rebord arrière (70),
la jante (1) étant destinée à être assemblée sur un véhicule (100) de sorte que le rebord avant (7) soit localisé d'un côté extérieur du véhicule (100) et que le rebord arrière (70) soit localisé d'un côté intérieur du véhicule (100), la partie d'aménagements avant (5) comportant une surface extérieure avant (9) destinée à entrer en contact avec un pneu (15) et une surface intérieure avant (8) opposée à ladite surface extérieure avant (9), la partie d'aménagements avant (5) comprenant un crochet avant (6) et un siège de talon avant (C2) pour un pneu (15), **caractérisé en ce que** la bande de roulage (3) comprend dans son épaisseur et selon une section radiale une cavité de crochet avant (C1) localisée au moins en partie dans le crochet avant (6) et une cavité de siège de talon avant (C2) localisée au moins en partie entre le siège de talon avant (12) et la partie de la surface intérieure avant (8) lui faisant face, la cavité de crochet avant (C1) et la cavité de siège de talon avant (C2) étant séparées par une paroi de renfort (20)..

2. Jante (1) selon la revendication précédente, la surface extérieure avant (9) de la partie d'aménagements avant (5) comprenant un bossage avant (11) de sécurité localisé entre le fond de jante (4) et le siège de talon avant (12), la bande de roulage (3) comprenant une cavité de bossage avant (C3) localisée entre le bossage avant (11) et la surface intérieure avant (8) de la partie d'aménagements avant (5) faisant face audit bossage avant (11), la cavité de bossage avant (C3) et la cavité de siège de talon avant (C2) étant séparées par une paroi de consolidation (21), de sorte que la paroi de renfort (20) et la paroi de consolidation (21) forment une cloison de séparation (221) sensiblement en forme de V autour de la cavité de siège de talon avant (C2), selon une coupe radiale de la bande de roulage (3).

3. Jante (1) selon la revendication précédente, la cloison de séparation (221) ayant une épaisseur supérieure à deux millimètres, selon une coupe radiale de la bande de roulage (3).

4. Jante (1) selon l'une quelconque des revendications 2 ou 3, la cavité de bossage avant (C3) étant scindée en une première sous-cavité de bossage avant (C31) et une deuxième sous-cavité de bossage avant (C32) de sorte que la première sous-cavité de bossage avant (C31) et la cavité de siège de talon avant (C2) sont séparées de la deuxième sous-cavité de bossage avant (C32) par une paroi de séparation (22), de sorte que la paroi de séparation (22), la paroi de renfort (20) et la paroi de consolidation (21) forment une cloison circonférentielle (222) sensiblement triangulaire autour de la cavité de siège de talon avant (C2), selon une coupe radiale de la bande de roulage (3).

5. Jante (1) selon l'une quelconque des revendications précédentes, le volume de la pluralité de cavités avant (C1, C2, C3, C31, C32) occupant entre 40% et 80% du volume la partie d'aménagements avant (5).

6. Jante (1) selon l'une quelconque des revendications précédentes, la partie d'aménagements arrière (50) comprenant un crochet arrière (60) et un siège de talon arrière (120) pour un pneu (15), la bande de roulage (3) comprenant dans son épaisseur au moins une cavité arrière (C5, C6) dans la partie d'aménagements arrière (50).

7. Jante (1) selon la revendication précédente, comprenant une cavité de crochet arrière (C5) localisée au moins en partie dans le crochet arrière (60).

8. Jante (1) selon l'une quelconque des revendications 6 ou 7, la partie d'aménagements arrière (50) comportant une surface extérieure arrière (90) destinée à entrer en contact avec un pneu (15) et une surface intérieure arrière (80) opposée à ladite surface extérieure avant (90), la surface extérieure arrière (90) de la partie d'aménagements arrière (50) comprenant un bossage arrière (110) de sécurité localisé entre le fond de jante (4) et le siège de talon arrière (120), la bande de roulage (3) comprenant une cavité de bossage arrière (C6) localisée entre le bossage arrière (110) et la surface intérieure arrière (80) de la partie d'aménagements arrière (50) faisant face audit bossage arrière (110).

9. Jante (1) selon l'une quelconque des revendications précédentes, au moins deux cavités (C1, C2, C3, C31, C32, C5, C6) étant de forme sensiblement annulaire et coaxiales avec un axe de rotation (103) de la bande de roulage (3).

## Patentansprüche

1. Felge (1) für ein Rad (102) eines Fahrzeugs (100), welche mit einer Metalllegierung mittels eines dreidimensionalen Drucks gedruckt wird und einen im Wesentlichen kreisförmigen Laufstreifen (3) aufweist, der von einem vorderen Felgenrand (7) und einem hinteren Felgenrand (70) begrenzt wird, wobei der Laufstreifen (3) umfasst:
- einen zentralen Felgenboden (4),
- einen vorderen Ausstattungsteil (5) für eine vordere Abstützung eines Reifens (15), der sich zwischen dem Felgenboden (4) und dem vorderen Felgenrand (7) befindet,
- einen hinteren Ausstattungsteil (50) für eine hintere Abstützung eines Reifens (15), der sich zwischen dem Felgenboden (4) und dem hinteren Felgenrand (70) befindet,
wobei die Felge (1) dazu bestimmt ist, so an ein Fahrzeug (100) angebaut zu werden, dass sich der vordere Felgenrand (7) auf einer äußeren Seite des Fahrzeugs (100) befindet und dass sich der hintere Felgenrand (70) auf einer inneren Seite des Fahrzeugs (100) befindet, wobei der vordere Ausstattungsteil (5) eine vordere Außenfläche (9), die dazu bestimmt ist, mit einem Reifen (15) in Kontakt zu kommen, und eine der vorderen Außenfläche (9) gegenüberliegende vordere Innenfläche (8) aufweist, wobei der vordere Ausstattungsteil (5) ein vorderes Felgenhorn (6) und einen vorderen Wulstsitz (C2) für einen Reifen (15) umfasst,
**dadurch gekennzeichnet, dass** der Laufstreifen (3) in seiner Dicke und in einem radialen Schnitt einen vorderen Felgenhornhohlraum (C1), der sich wenigstens teilweise im vorderen Felgenhorn (6) befindet, und einen vorderen Wulstsitzhohlraum (C2), der sich wenigstens teilweise zwischen dem vorderen Wulstsitz (12) und dem ihm gegenüberliegenden Teil der vorderen Innenfläche (8) befindet, umfasst, wobei der vordere Felgenhornhohlraum (C1) und der vordere Wulstsitzhohlraum (C2) durch eine Verstärkungswand (20) getrennt sind.

2. Felge (1) nach dem vorhergehenden Anspruch, wobei die vordere Außenfläche (9) des vorderen Ausstattungsteils (5) einen vorderen Sicherheitshump (11) umfasst, der sich zwischen dem Felgenboden (4) und dem vorderen Wulstsitz (12) befindet, wobei der Laufstreifen (3) einen vorderen Humphohlraum (C3) umfasst, der sich zwischen dem vorderen Hump (11) und der vorderen Innenfläche (8) des vorderen Ausstattungsteils (5), die dem vorderen Hump (11) gegenüberliegt, befindet, wobei der vordere Humphohlraum (C3) und der vordere Wulstsitzhohlraum (C2) durch eine Verfestigungswand (21) getrennt sind, derart, dass in einem radialen Schnitt des Laufstreifens (3) die Verstärkungswand (20) und die Verfestigungswand (21) eine im Wesentlichen V-förmige Trennwandung (221) um den vorderen Wulstsitzhohlraum (C2) herum bilden.

3. Felge (1) nach dem vorhergehenden Anspruch, wobei die Trennwandung (221) in einem radialen Schnitt des Laufstreifens (3) eine Dicke aufweist, die größer als zwei Millimeter ist.

4. Felge (1) nach einem der Ansprüche 2 oder 3, wobei der vordere Humphohlraum (C3) in einen ersten vorderen Teil-Humphohlraum (C31) und einen zweiten vorderen Teil-Humphohlraum (C32) aufgeteilt ist, derart, dass der erste vordere Teil-Humphohlraum (C31) und der vordere Wulstsitzhohlraum (C2) von dem zweiten vorderen Teil-Humphohlraum (C32) durch eine Trennwand (22) getrennt sind, derart, dass in einem radialen Schnitt des Laufstreifens (3) die Trennwand (22), die Verstärkungswand (20) und die Verfestigungswand (21) eine im Wesentlichen dreieckige umlaufende Wandung (222) um den vorderen Wulstsitzhohlraum (C2) bilden.

5. Felge (1) nach einem der vorhergehenden Ansprüche, wobei das Volumen der mehreren vorderen Hohlräume (C1, C2, C3, C31, C32) zwischen 40 % und 80 % des Volumens des vorderen Ausstattungsteils (5) einnimmt.

6. Felge (1) einem der vorhergehenden Ansprüche, wobei der hintere Ausstattungsteil (50) ein hinteres Felgenhorn (60) und einen hinteren Wulstsitz (120) für einen Reifen (15) umfasst, wobei der Laufstreifen (3) in seiner Dicke wenigstens einen hinteren Hohlraum (C5, C6) im hinteren Ausstattungsteil (50) umfasst.

7. Felge (1) nach dem vorhergehenden Anspruch, welche einen hinteren Felgenhornhohlraum (C5) umfasst, der sich wenigstens teilweise im hinteren Felgenhorn (60) befindet.

8. Felge (1) nach einem der Ansprüche 6 oder 7, wobei der hintere Ausstattungsteil (50) eine hintere Außenfläche (90), die dazu bestimmt ist, mit einem Reifen (15) in Kontakt zu kommen, und eine der hinteren Außenfläche (90) gegenüberliegende hintere Innenfläche (80) aufweist, wobei die hintere Außenfläche (90) des hinteren Ausstattungsteils (50) einen hinteren Sicherheitshump (110) umfasst, der sich zwischen dem Felgenboden (4) und dem hinteren Wulstsitz (120) befindet, wobei der Laufstreifen (3) einen hinteren Humphohlraum (C6) umfasst, der sich zwischen dem hinteren Hump (110) und der hinteren Innenfläche (80) des hinteren Ausstattungsteils (50), die dem hinteren Hump (110) gegenüberliegt, befindet.

9. Felge (1) nach einem der vorhergehenden Ansprüche, wobei wenigstens zwei Hohlräume (C1, C2, C3, C31, C32, C5, C6) im Wesentlichen ringförmig und mit einer Drehachse (103) des Laufstreifens (3) koaxial sind.

## Claims

1. Rim (1) for a wheel (102) of a vehicle (100), printed with a metal alloy by means of three-dimensional printing, comprising a substantially circular barrel (3) delimited by a front flange (7) and a rear flange (70), the barrel (3) comprising:
- a central rim base (4),
- a front fittings part (5) for front support of a tyre (15), located between the rim base (4) and the front flange (7),
- a rear fittings part (50) for rear support of a tyre (15), located between the rim base (4) and the rear flange (70),
the rim (1) being intended to be assembled on a vehicle (100) such that the front flange (7) is located on an outer side of the vehicle (100) and the rear flange (70) is located on an inner side of the vehicle (100),
the front fittings part (5) comprising a front outer surface (9) intended to come into contact with a tyre (15), and a front inner surface (8) opposite to said front outer surface (9), the front fittings part (5) comprising a front hook (6) and a front bead seat (C2) for a tyre (15),
**characterized in that** the barrel (3) comprises, within its thickness and in a radial cross section, a front hook cavity (C1) located at least in part in the front hook (6), and a front bead seat cavity (C2) located at least in part between the front bead seat (12) and that part of the front inner surface (8) facing it, the front hook cavity (C1) and the front bead seat cavity (C2) being separated by a reinforcing wall (20).

2. Rim (1) according to the preceding claim, the front outer surface (9) of the front fittings part (5) comprising a front safety hump (11) located between the rim base (4) and the front bead seat (12), the barrel (3) comprising a front hump cavity (C3) located between the front hump (11) and the front inner surface (8) of the front fittings part (5) facing said front hump (11), the front hump cavity (C3) and the front bead seat cavity (C2) being separated by a consolidating wall (21), with the result that the reinforcing wall (20) and the consolidating wall (21) form a substantially V-shaped separating partition (221) around the front bead seat cavity (C2), in a radial cross section of the barrel (3).

3. Rim (1) according to the preceding claim, the separating partition (221) having a thickness greater than two millimetres, in a radial cross section of the barrel (3).

4. Rim (1) according to either one of Claims 2 and 3, the front hump cavity (C3) being split into a first front hump sub-cavity (C31) and a second front hump sub-cavity (C32) such that the first front hump sub-cavity (C31) and the front bead seat cavity (C2) are separated from the second front hump sub-cavity (C32) by a separating wall (22), with the result that the separating wall (22), the reinforcing wall (20) and the consolidating wall (21) form a substantially triangular circumferential partition (222) around the front bead seat cavity (C2), in a radial cross section of the barrel (3).

5. Rim (1) according to any one of the preceding claims, the volume of the plurality of front cavities (C1, C2, C3, C31, C32) occupying between 40% and 80% of the volume of the front fittings part (5) .

6. Rim (1) according to any one of the preceding claims, the rear fittings part (50) comprising a rear hook (60) and a rear bead seat (120) for a tyre (15), the barrel (3) comprising within its thickness at least one rear cavity (C5, C6) in the rear fittings part (50).

7. Rim (1) according to the preceding claim, comprising a rear hook cavity (C5) located at least in part in the rear hook (60).

8. Rim (1) according to either one of Claims 6 and 7, the rear fittings part (50) comprising a rear outer surface (90) intended to come into contact with a tyre (15), and a rear inner surface (80) opposite to said front outer surface (90), the rear outer surface (90) of the rear fittings part (50) comprising a rear safety hump (110) located between the rim base (4) and the rear bead seat (120), the barrel (3) comprising a rear hump cavity (C6) located between the rear hump (110) and the rear inner surface (80) of the rear fittings part (50) facing said rear hump (110).

9. Rim (1) according to any one of the preceding claims, at least two cavities (C1, C2, C3, C31, C32, C5, C6) being of substantially annular shape and coaxial with an axis of rotation (103) of the barrel (3) .
